# EUROPEAN PATENT APPLICATION

(11) **EP 4 711 118 A1**
(43) Date of publication of application: **18.03.2026**
(21) Application number: 25192982.4
(22) Date of filing: 31.07.2025
(51) Int. Cl.: B29C 65/78, B29C 65/36, B29C 65/10, B65B 51/20, B65B 51/22, B65B 51/26, B65B 41/18, B65B 57/04, B65B 9/20, B29L 31/00, B65B 51/10

(54) **A PACKAGING MACHINE FOR PRODUCING SEALED PACKAGES FROM A WEB OF PACKAGING MATERIAL, CORRESPONDING METHOD AND COMPUTER PROGRAM PRODUCT**

(30) Priority: 13.09.2024 IT 202400020473
(71) Applicant: Tetra Laval Holdings & Finance S.A., 1009 Pully (CH)
(72) Inventor: MARSELLA, Angelo, 41123 MODENA (IT); MELANDRI, Marco, 41123 MODENA (IT); LAHRACHE, Achraf, 41123 MODENA (IT); BERGAMI, Paolo, 41123 MODENA (IT); BULGARELLI, Daniele, 41123 MODENA (IT); VERONI, Danilo, 41123 MODENA (IT); MARTINI, Lorenzo, 41123 Modena (IT); SANIBONDI, Paolo, 41123 MODENA (IT)
(74) Representative: Tetra Pak Patent Attorneys

(57) **Abstract**

A packaging machine (1) for producing sealed packages from a web (4) of packaging material comprises :

- a tube forming and sealing device (4) for folding said web (3) into a tube (5) and longitudinally sealing it, the forming and sealing device (4) comprising a heating element (40);

- an isolation chamber (8), within which the heating element (40) is positioned;

- a profile measurement sensor (12) facing the heating element (40) and configured to generate a sensor signal (S); and

- a control unit (13) configured to detect a portion (40") of the heating element (40) as a function of the sensor signal (S).

## Description

### TECHNICAL FIELD

The present invention relates to a packaging machine for producing sealed packages from a web of packaging material.

### BACKGROUND ART

As it is known, many liquid or pourable food products, such as for example pasteurized or long-life (UHT) milk, tomato sauce, wine, fruit juice are sold in packages made of sterilized packaging material.

Packages of this sort are normally produced within automatic packaging machines, which feed a web of packaging material through a sterilizing unit by means of known guiding elements (like for example rollers) for sterilizing the web of packaging material alternatively by means of chemical sterilization in a sterilizing bath (e.g. by applying a chemical sterilizing agent, such as a hydrogen peroxide solution) or by means of physical sterilization (e.g. by means of an electron beam).

The packaging machine further comprises a folding unit arranged downstream of the sterilizing unit, extending substantially vertically and designed to fold the web of packaging material for producing a continuous tube. Inside the folding unit, the web of packaging material is folded from a continuous planar shape to a continuous tubular shape with a vertical axis. The web of packaging material with a planar shape is folded into a cylinder that is successively subdivided into a plurality of pillow packs which are subjected to successive mechanical folding operations to obtain the finished sealed packages.

The folding unit is preferably arranged within a fixed structure in which the web of packaging material is maintained in a sterile-air environment. The folding unit further comprises a number of folding devices placed in succession (one after the other); by interacting with the folding devices, opposite lateral edges or portions of the web of packaging material are placed one on top of the other so as to form the tube and so as to define an overlapping area. The packaging machine further comprises a sealing unit for sealing overlapping lateral edges or portions of the web of packaging material to finally obtain a fluid-tight longitudinal seal in the tube.

Finally, the packaging machine comprises a control apparatus to supervise the operation of the different units in the packaging machine.

Even though the known packaging machines work satisfactorily well, a desire is felt in the sector to further improve the operation of such machines, in particular the folding and/or sealing unit.

A need is felt to predict and/or prevent anomalies that may occur in the production of the packages, e.g. so-called tube twisting or suboptimal heating patterns during a sealing phase.

A need is felt for reducing possible operational downtimes caused by manual checks and adjustments needed for the tube forming and sealing device. This downtime can significantly reduce the efficiency of the packaging process and increase production costs.

### DISCLOSURE OF INVENTION

The object of the invention is to provide a packaging machine for producing sealed packages from a web of packaging material addressing the drawbacks of the state of the art and, in particular, improving monitoring operation of the packaging machine.

According to the present invention, there is provided a packaging machine for producing sealed packages from a web of packaging material according to the appended claims. According to the present invention, there is provided a corresponding method of monitoring operation of a packaging machine according to the appended claims and a corresponding computer program product.

### BRIEF DESCRIPTION OF THE DRAWINGS

A non-limiting embodiment of the present invention will be described by way of example with reference to the accompanying drawings, in which:
- figure 1 is a perspective view, with parts removed for clarity, of a packaging machine for producing packages from a packaging material, in accordance with the present invention;
- figures 2 and 3 are representations of details of one or more embodiments based on the packaging machine of figure 1;
- figure 4 is an example of a sensor signal generated by the profile measurement sensor;
- figure 5 is an example of a sensor signal generated by the profile measurement sensor;
- figures 6 and 7 are examples of a calculation of a position of a heating element of the packaging machine according to the invention as a function of sensor signal;
- figure 8 is a representation of details of one or more embodiments based on the packaging machine of figure 1;
- figure 9, a) and b) are an example of a portion of a tube of packaging material to be detected by a profile measurement sensor according to one or more embodiments, and a sensor signal generated by the profile measurement sensor, respectively.

### BEST MODE FOR CARRYING OUT THE INVENTION

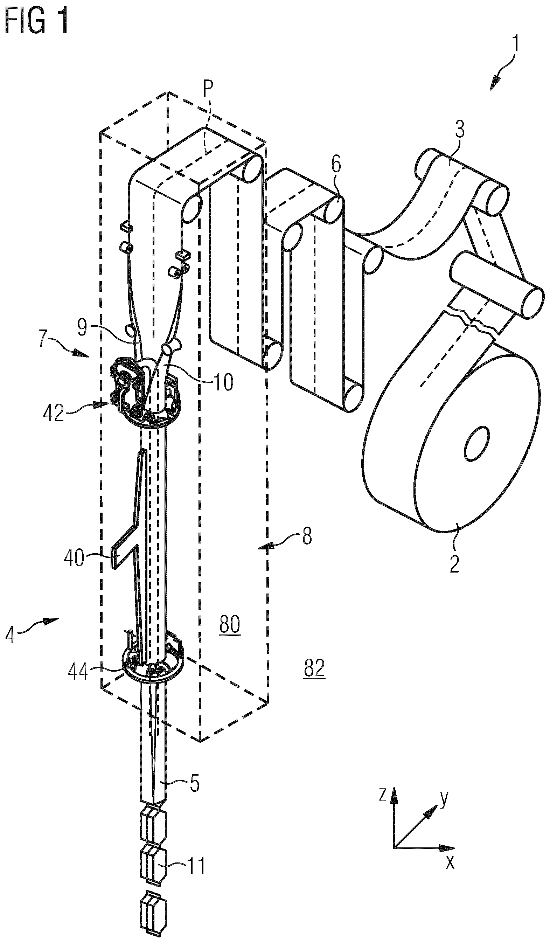

Figure 1 discloses, as a whole, a packaging machine 1 for continuously producing sealed packages, containing a pourable food product, such as for example pasteurized or long-life (UHT) milk, tomato sauce, wine, fruit juice. The sealed packages are obtained from a packaging material unwound from a reel 2 and fed along an advancement path P. When unwound from the reel 2, the packaging material has the shape of a continuous planar web 3 of packaging material.

Typically, the packaging material has a multi-layer structure. More specifically, the packaging material may comprise at least a layer of fibrous material, such as for example a paper or cardboard layer, and at least two layers of heat-seal plastic material, e.g. polyethylene, with the layer of fibrous material interposed between them. One of these two layers of heat-seal plastic material may define the inner face of the packages eventually contacting the pourable product.

According to some possible non-limiting embodiments, the packaging material may also comprise a layer of gas- and light-barrier material, e.g. aluminum foil or ethylene vinyl alcohol (EVOH) film, which, in particular, is arranged between one of the layers of heat-seal plastic material and the layer of fibrous material. Preferably, the packaging material may also comprise a further layer of heat-seal plastic material interposed between the layer of gas- and light-barrier material and the layer of fibrous material.

The packaging machine 1 comprises a tube forming and sealing device 4 configured to form a tube 5 from the advancing web 3 of packaging material and to longitudinally seal the tube 5. The tube forming and sealing device 4 is arranged along the advancement path P. The forming and sealing device 4 comprises a heating element 40 configured to longitudinally seal the tube 5. According to a first embodiment, the heating element 40 may comprise an induction heating element or may be configured to provide heated air towards the packaging material.

The packaging machine 1 comprises a number of guiding elements 6 configured to convey the web 3 of packaging material along the advancement path P.

The packaging machine 1 preferably comprises a filling device 7 for filling the tube 5 with the pourable product. The tube 5 is continuously filled with the pourable food product through the filling device 17 comprising a pour conduit, which partially extends inside the tube 5.

The packaging machine 1 comprises an isolation chamber 8, preferentially delimiting an inner environment 80 from an outer environment 82. Preferentially, the inner environment 80 is a sterile (aseptic) environment, preferably containing a controlled atmosphere. Preferentially, the tube forming and sealing device 4 is at least partially arranged within the isolation chamber 8, in particular within the inner environment 80, and is configured to fold and longitudinally seal the tube 5 within the isolation chamber 8, in particular within the inner environment 80. That is, the web 3 of packaging material advances through the isolation chamber 8 along the advancement path P.

In the figures, a Cartesian coordinate system is adopted, comprising a first axis X, a second axis Y and a third axis Z. The first, second and third axis X, Y, Z are orthogonal to each other.

In particular, the first axis X is parallel to a transversal (horizontal) direction.

In particular, the third axis Z is parallel to a longitudinal (vertical) direction. The tube 5 may extend parallelly to the third axis Z. The tube forming and sealing device 4 may extend substantially vertically along the advancement path P for producing a continuous tube 5. Inside the tube forming and sealing device 4, the web 3 of packaging material is folded from a continuous planar shape to a continuous tubular shape along the third axis Z.

The tube forming and sealing device 4 further comprises a number of folding devices 42, 44 placed along the advancement path P in succession (one after the other).

Advantageously, the folding devices 42, 44 may at least partially enclose the web 3 of packaging material. For example, the folding devices 42, 44 may comprise a forming ring surrounding the web 3 of packaging material. The folding devices 42 may comprise a number of rollers cooperating to fold the web 3 of packaging material.

In particular, the tube forming and sealing device 4 may comprise a first folding device 42 placed along the advancement path P, in particular upstream with respect to the heating element 40. The first folding device is configured to interact with the web 4 of packaging material to support folding the web 3 of packaging material gradually into a tube (cylinder) and superimpose a first lateral edge 9 of the web 3 of packaging material to a second lateral edge 10 of the web 3 of packaging material, opposite the (first) lateral edge 9, to form the continuous tube 5. As considered herein, the lateral edges 9, 10 of the web 3 comprise lateral sections of the web 3 of packaging material which comprise respective borders thereof. As further considered herein, the borders of the lateral edges 9, 10 comprise the extremities of the respective edges, in particular delimiting the end of the web 3. As depicted in the figures, the first lateral edge 9 has a border 14. The border 14 is visible even once the tube 5 is sealed.

The tube forming and sealing device 4 may comprise a second folding device 44 placed downstream of the folding device along the advancement path P.

Preferably, the second folding device 44 may be placed downstream of the heating element 40. The heating element 40 may be interposed between the first and second folding devices 42, 44.

The packaging machine 1 may further comprise a transversal forming and sealing unit (not shown), in which the tube 5 is gripped to transversely seal the tube and form pillow packs 11. Finally, the pillow packs 11 are subjected to successive mechanical folding operations to obtain the finished sealed packages.

According to the invention, the packaging machine 1 comprises a profile measurement sensor 12. The profile measurement sensor 12 faces the heating element 40 and/or the web 3 of packaging material advancing through the isolation chamber 8. The profile measurement sensor 12 is configured to generate a sensor signal S. The profile measurement sensor 12 is configured to detect a profile or contours of the at least a portion of one or more lateral edges 9, 10 and/or a portion of the heating element 40.

Advantageously, the profile measurement sensor provides a precise assessment of the surface profile of one or more components and/or the web of packaging material. The sensor facilitates improving product quality and performance of the packaging machine. Advantageously, the profile measurement sensor 12 allows for a precise and continuous control of operation of the packaging machine 1.

The packaging machine 1 comprises a control unit 13 connected to the profile measurement sensor 12 and configured to receive the sensor signal S. The packaging machine 1 may comprise a control apparatus having at least an electronic control unit (ECU) configured to supervise the operation of the packaging machine 1. In one or more embodiments, the control unit 13 may be implemented in the control apparatus of the packaging machine 1.

The control unit 13 may be configured to detect, e.g. a presence and/or profile of, at least a portion of the heating element 40 and/or at least a portion of a lateral edge 9, 10 of the web 3 of packaging material as a function of the sensor signal S. In particular, the control unit 13 may be configured to detect at least a portion of the first lateral edge 9, in particular the border 14 thereof. The control unit 13 may be configured to detect at least a portion of the second lateral edge 10, e.g. a portion thereof that fails to be superimposed to the first lateral edge 10. The control unit 13 may be configured to detect at least a portion of the heating element 40, e.g. a portion thereof visible during operation of the packaging machine due to the position thereof between the first and second edge 9, 10 of packaging material.

The control unit 13 may be configured to calculate a position of the heating element 40 and/or the border 14 as a function of the sensor signal S. The position may be a relative position, e.g. defined with respect to one or more elements or components of the packaging machine 1, or an absolute position, e.g. defined with respect to a fixed frame of reference. For example, the control unit 13 may be configured to calculate a position (and optionally distance) of the border 14 of the first edge 9 with respect to the heating element 40. For example, the control unit 13 may be configured to detect a position variation of the border 14, e.g. a variation in time and/or with respect to heating element 40.

The profile measurement sensor 12 may be arranged along the advancement path P, e.g. at the area of the isolation chamber 8. In particular, the profile measurement sensor 12 may be at the isolation chamber 8 in the outer environment 82. The profile measurement sensor 12 may be positioned at an area of the isolation chamber 8 wherein the inner environment 80 and the outer environment 82 are separated by a (visible) light permeable barrier, e.g. a glass barrier.

The profile measurement sensor 12 may be positioned along the advancement path P between the first and second forming devices 42, 44. The profile measurement sensor 12 may be positioned along the advancement path P at the heating element 40 or (immediately) upstream of the heating element 40, e.g. between the first forming device 42 and the heating element 40. Advantageously, the profile measurement sensor 12 may be configured to operate in a contactless manner. In particular, the profile measurement sensor 12 may operate at an area of the packaging machine 1 wherein a contact with the web 4 of packaging material is not allowed because the web 4 of packaging material has been sterilized and/or passes through a harsh environment.

Accordingly, the profile measurement sensor 12 may comprise a contactless sensor, preferably an optic sensor element, even more preferably a profilometer. The profile measurement sensor 12 may be configured to detect surface characteristics, e.g. the profile, of at least a portion of the first and/or second lateral edge 9, 10, e.g. the border 14, and/or of at least a portion of the heating element 40.

The profile measurement sensor 12 may be configured to generate a continuous sensor signal S, that is the advancing packaging web 3 may be continuously detected. Advantageously, the control unit 13 may analyze the detected surface characteristics in real-time, providing feedback for quality control or adaptive system adjustments. The integration of the sensor 12 with the system allows for continuous monitoring of surface integrity and uniformity, particularly at critical areas such as the lateral edges 9, 10, the border 14, and the heating element 40, ensuring optimal performance and reliability of the overall system.

Preferably, the profile measurement sensor 12 may rely on a triangulation principle. For example, via a cylindrical lens, a laser beam is expanded to a laser line and projected onto the surface of the measurement object. The measurement object reflects the laser line. The reflected laser line is projected onto a surface camera in the sensor. The sensor uses the camera image and stored calibration data to calculate the profile of a measurement object. The profile measurement sensor 12 may comprise a CCD image sensor or a CMOS image sensor. The contactless profile measurement sensor 12 may comprise a beam emitter and a receiver. The beam emitter is configured for transmitting (or emitting) a (e.g. visible or non-visible) light beam or line LB towards the web 3 of packaging material and/or the heating element 40. The receiver may be configured for detecting the reflected light beam or line LB.

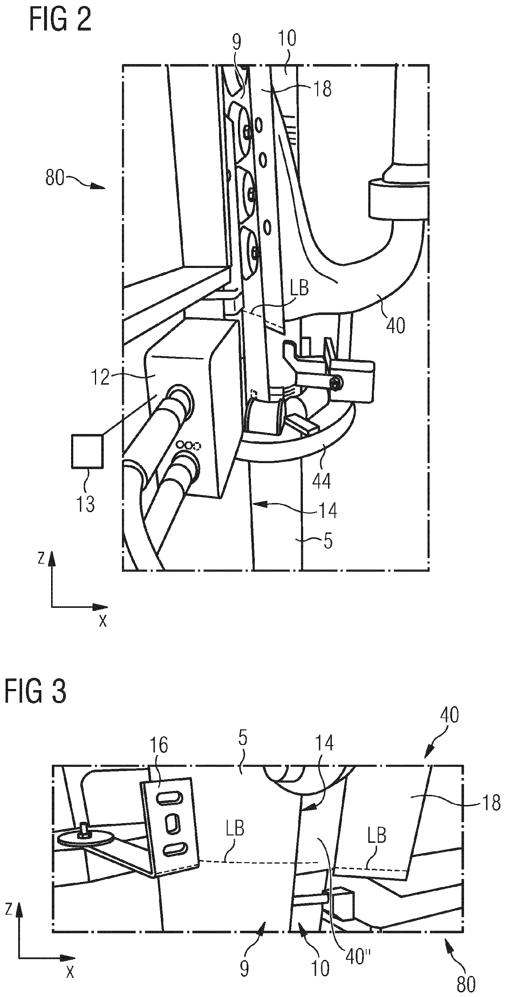

Figures 2 and 3 depict a profile measurement sensor 12 according to one or more embodiments at a sealing area, that is an area wherein the first lateral edge 9 and the second lateral edge 10 are joined together to form a seal. The heating element 40, e.g. configured to heat one or both the lateral edges 9, 10, may be positioned at the sealing area.

As exemplified in figures 2 and 3, the light beam LB may be directed towards the first lateral edge 9 and/or the heating element 40. In particular, the border 14 may be detected and the portion of the heating element 40 that, in use, is not hidden by the first lateral edge 9. In other words, the first lateral edge 9 may be at least partially positioned, during operation of the packaging machine 1, between the profile measurement sensor 12 and the heating element 40.

The packaging machine 1 may comprise a first marker 16. The first marker 16 may be fixed with respect to the packaging machine 1, e.g. attached to a frame of the packaging machine 1. The first marker 16 may be positioned in the isolation chamber 8, i.e. in the inner environment 80. The profile measurement sensor 12, as illustrated in figures 2 and 3, faces the first marker 16, in particular the light beam LB is directed towards the first marker 16. The control unit 13 is configured to detect (e.g. a position and/or profile of) the first marker 16 as a function of the sensor signal S. The first marker 16 may provide a fixed reference for the profile measurement sensor 12.

The control unit 13 may be configured to detect a position of the first lateral edge 9 and/or the border 16 as a function of (with respect to) the first marker 16. For example, the control unit 13 may detect a position variation of the first lateral edge 9 and optionally the border 14 by checking a distance with respect to the first marker 16. The control unit 13 may be configured to detect a position of the heating element 40 by checking a distance from the first marker 16.

Advantageously, the control unit 13 may provide an indication in the position/physical orientation of the profile measurement sensor 12. The control unit 13 may be configured to detect a position and/or physical orientation of the first marker 16. The control unit 13 may be further configured to detect whether a variation in position and/or physical orientation of the first marker 16 occurs, e.g. during operation of the packaging machine 1.

The control unit 13 may be further configured to detect whether the detected position and/or physical orientation substantially correspond to a predetermined position and/or physical orientation. If the detected and predetermined position and/or physical orientation do not correspond, the control unit 13 may be configured to transmit an alert signal indicating that the profile measurement sensor 12 may have been moved and/or not been installed properly. For example, this can occur if the profile measurement sensor 12 is positioned at a door or window outside of the isolation chamber 8 and an operator opens and closes the door or window moving the profile measurement sensor 12.

According to one or more embodiments, the control unit 13 may be configured to detect a variation of the position of the first lateral edge 9, in particular the border 14, in time and/or with respect to the position of the heating element 40.

During operation of the packaging machine 1, the first lateral edge 9 of packaging material may vary position. In particular, the first lateral edge 9 may move along a transversal direction, e.g. parallel to the first axis X, orthogonal to the advancement path P of the web 3, and/or a lateral direction, e.g. parallel to the second axis Y, orthogonal to the transversal direction and the advancement path P of the web 3. As depicted in the figures, a movement in the transversal direction substantially maintains a distance between the first lateral edge 9 and the profile measurement sensor 12. A movement in the lateral direction varies a distance between the first lateral edge 9 of packaging material and the profile measurement sensor 12.

The control unit 13 may be configured to detect whether a lateral or transversal variation in the position of the web 3 of packaging material occurs. That is, the control unit 13 is configured to detect if a position variation of the first lateral edge 9 and/or the border 14 occurs, in time, along the lateral direction and/or the transversal direction.

Advantageously, the detected movements of the web of packaging material can be corrected before they can result in an anomaly in one or more sealed packages.

For example, the profile measurement sensor 12 may generate the signal S detecting the border 14. The control unit 13 may be configured to check whether a position of the detected border 14 substantially corresponds to a predetermined border position or varies in time more than a predetermined amount. If a difference exists between the detected border 14 and the predetermined border position, the control unit 13 may be configured to adjust operation of the packaging machine 1 as a function of such difference. For example, one or more corrective actions may be performed: a position of the border 14 may be varied, an alarm signal may be transmitted to an operator, and/or a speed of the web 3 of packaging material may be reduced.

The control unit 13 may be configured to check whether a tube twisting event occurs as a function of the lateral and/or transversal variation. If the first lateral edge 9 moves away from a predetermined position, the overlapping area may in turn move.

The control unit 13 may be configured to check whether an overheating or underheating event occurs as a function of the lateral and/or transversal variation. If the first lateral edge 9 moves away or towards the heating element 40, the first lateral edge 9 may be temporarily under exposed or over exposed to the heat generated by the heating element 40.

The tube forming and sealing device 4 may comprise a number of pressure elements 46, e.g. a roller, configured to apply pressure between the first and second lateral edges 9, 10. The pressure elements 46 may be positioned at the second folding device 44. If a tube twisting occurs, the overlapping area may result in a non-optimal position of the lateral edges 9, 10 at the pressure elements 46 during the pressing process.

The control unit 13 may be configured to calculate a distance between the first lateral edge 9 of the web 3 and the heating element 40. For example, the control unit 13 may be configured to calculate a distance between the border 16 and the heating element 40. Advantageously, this may allow a more precise control of the packaging machine operation, in particular, monitoring a distance between the lateral edge 9 and the heating element may reduce a possibility of overheating or underheating events occurring.

According to one or more embodiments, the packaging machine 1 may comprise a second marker 18 coupled to the heating element 40. The second marker 18 is fixed on the heating element 40, in particular the second marker 18 jointly moves with respect to the heating element 40. The control unit 13 is configured to detect the second marker 18. Advantageously, the second marker may allow an easier detection of the heating element 40 and its position.

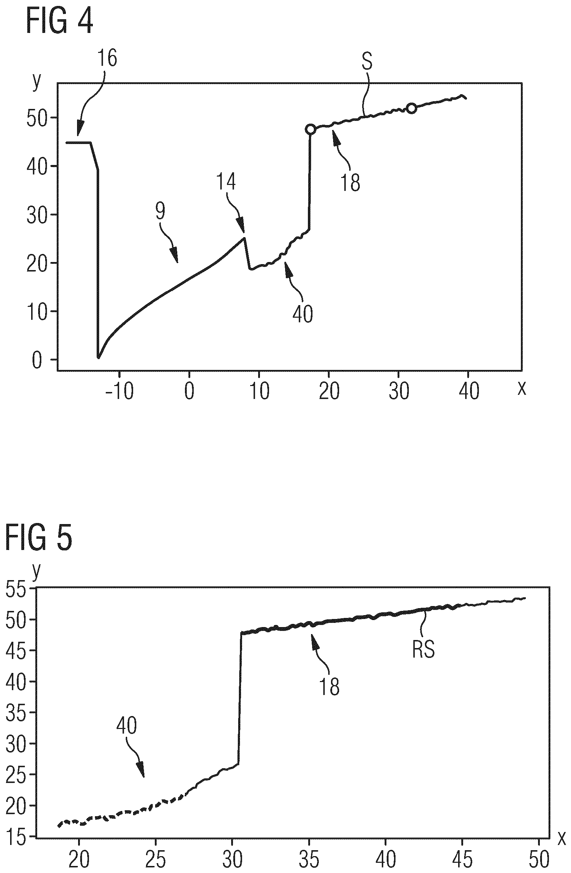

The second marker 18 may be positioned at a different distance to the profile measurement sensor 12 with respect to the heating element 40. That is, the second marker 18 may protrude or project from the heating element 40. The second marker 18, as exemplified in figure 4 is closer to the profile measurement sensor 12 with respect to the heating element 40.

Figure 4 shows an example of a sensor signal S generated by the profile measurement sensor depicted in figures 2 and 3. In particular, as a function of the sensor signal S, the first marker 16, the first lateral edge 9, the border 14, a portion of the heating element 40 (e.g. not hidden by the first edge) and/or the second marker 18 can be detected. The different components are indicated in figure 4 for immediate reference. The figure is a bi-dimensional plot along the first axis X and the second axis. The sensor signal S may be indicative of a position in space, and optionally of a variation of position, of the first marker 16, the first lateral edge 9, the border 14, a portion of the heating element 40 and/or the second marker 18. A difference along the second axis defines a difference in distance of the component from the profile measurement sensor 12. As exemplified in the figure, the first marker 16 and the second marker 18 are closer to the profile measurement sensor 12 with respect to the first lateral edge 9 and the heating element 40. Advantageously, precise monitoring of the operation of the packaging machine and the tube forming and sealing device may be facilitated.

The first marker 16 is a fixed element within the packaging machine 1. As such, the first marker 16 can provide an absolute reference position for the remaining objects, the position thereof being variable.

The control unit 13 may be configured to calculate a distance between the first marker 16 and the border 14. If the distance varies, the control unit may detect a tube twisting event occurring.

The control unit 13 may be configured to calculate a distance between the first marker 16 and the second marker 18. If the distance varies, the control unit 13 may detect a overheating or underheating event.

In particular, the control unit 13 may be configured to check if the distance varies in time, and/or check if the distance varies from a predetermined distance.

The control unit 13 may be configured to calculate a distance between the first lateral edge 9, in particular the border 14, and the second marker 18. If the distance varies, the control unit 13 may detect an overheating or underheating event.

The control unit 13 may be configured to calculate the distance between the first lateral edge 9 of the web 3 and the heating element 40 and/or the distance between the first lateral edge 9 of the web 3 and the second marker 18. The control unit 13 may be configured to check whether the distance between the border 14 of the first lateral edge 9 and the second marker 18 is non null, in particular whether the distance is above a predetermined value.

Advantageously, even when a portion of the heating element 40 is not detectable by the control unit 13, e.g. due to the portion of the heating element 40 being hidden by the first lateral edge 9, the second marker 18 may allow a precise localization thereof.

The control unit 13 may be configured to:
- calculate a relative physical orientation of the second marker 18 with respect to the first marker 16,
- check if the physical orientation varies in time, and/or
- check if the physical orientation varies from a predetermined physical orientation.

Advantageously, this may indicate that the heating element 40 is misplaced, thereby possibly resulting in anomalies in operation of the forming and sealing device.

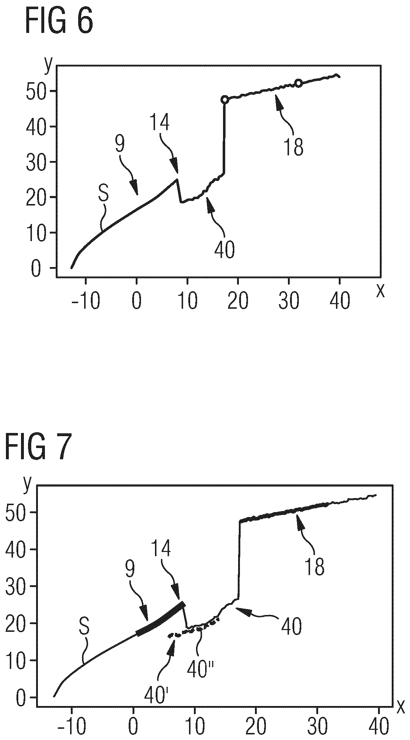

Figure 5 exemplifies a reference sensor signal RS indicative of the heating element 40 and the second marker 18, in particular in the absence of the web 3 of packaging material. That is, the reference sensor signal RS is indicative of the profile of the heating element 40. Figure 6 exemplifies a sensor signal S, e.g. that can be obtained during operation of the packaging machine 1 of figures 2 and 3, indicative of the heating element 40 and the second marker 18, in particular in the presence of the web 3 of packaging material. As can be seen from the latter figure, a portion of the heating element 40 is not detectable due to the first lateral edge 9.

The control unit 13 may be configured to calculate a portion of the heating element 40, non-detectable by means of the profile measurement sensor 12, as a function of the reference sensor signal RS and the sensor signal S.

In other words, see e.g. figure 7, in use the web 3 of packaging material, and in particular the first lateral edge 9, is positioned between the profile measurement sensor 12 and a first portion 40' of the heating element 40. The control unit 13 may be configured to detect (a position and/or profile) of a second portion 40'' of the heating element 40 as a function of the sensor signal S, the second portion 40" being different from the first portion 40'.

The control unit 13 may be configured to calculate a position (and optionally a profile) of the first portion 40' of the heating element 40 at least as a function of the second portion 40'' of the heating element 40. In particular, the first portion 40' of the heating element 40 may be calculated also as a function of the reference signal RS, the first lateral edge 9 and/or the second marker 18.

According to the present disclosure, the control unit 13 may be configured to store data indicative of the detected first and/or second lateral edge 9, 10 of the web 3, the heating element 40, first and/or second marker 16, 18. Preferably, the control unit 13 may be configured to store data indicative of the calculated first portion 40' of the heating element 40. Advantageously, the performance of the packaging machine 1 can be better monitored. For example, the control unit 13 may further store machine events, e.g. splices or tube twisting event, and/or information on produced packaged. The stored data may be associated with the machine events and/or the produced packages. Advantageously, this way it is possible to track how the packaging machine 1 performs during production of specific packages.

As previously discussed, the control unit 13 may be configured to adjust operation of the packaging machine 1 as a function of the sensor signal S, e.g. based on the detected elements. Optionally, the control unit 13 may be configured to vary a speed of the web of packaging material (e.g. reducing or stopping production) and/or adjusting operation of a tube forming and sealing device 4, e.g. adjusting a position of the heating element 40 and/or the lateral edges 9, 10. Optionally, the control unit 13 may transmit an alert signal to an operator in case an anomaly in operation of the packaging machine 1 is identified as a function of the sensor signal S.

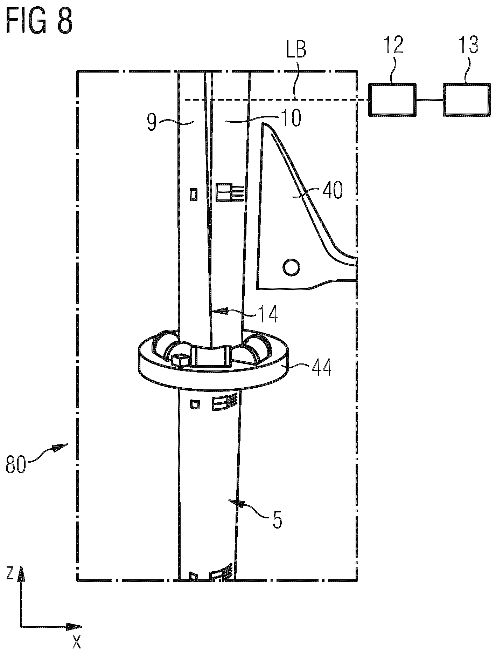

According to one or more embodiments, as exemplified in figure 8, the profile measurement sensor 12 may be positioned upstream of the heating element 40, in particular before the tube 5 is sealed.

The control unit 13 may be configured to detect a position of the first lateral edge 9, the second lateral edge 10 and/or the border 16 as a function of (with respect to) the first marker 16.

For example, the control unit 13 may detect a position variation of the first and/or second lateral edge 9, 10 and optionally the border 14 by checking a distance with respect to the first marker 16. Advantageously, this may allow detecting a tube twisting event.

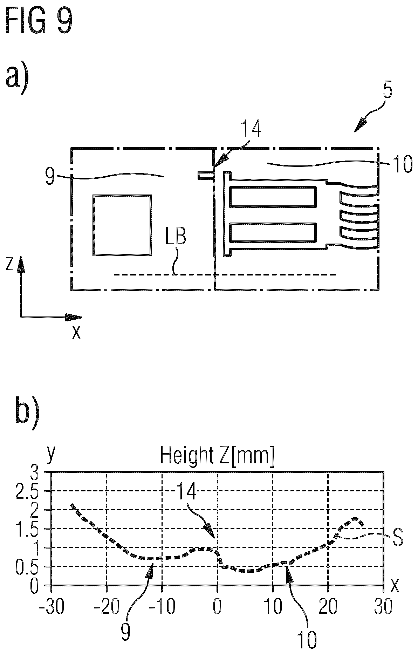

According to one or more embodiments, as exemplified in figure 9, portion a), the profile measurement sensor 12 may be positioned downstream of the forming and sealing device 4, in particular after the tube 5 is sealed. In particular, the profile measurement sensor 12 can face the sealed tube 5.

The control unit 13 may be configured to detect, see e.g. figure 10 portion b) the first lateral edge 9, the border 14 and the portion of the second lateral edge 10 that remains visible after sealing. In particular, the control unit 13 may be configured to detect the border 14 and check whether the border 14 substantially corresponds to the predetermined border position.

The control unit 13 may thus be configured to perform a method of monitoring operation of the packaging machine 1. The present description may further relate to a computer program product, loadable in the memory of at least one electronic control unit, e.g. 13, and comprising software code portions suitable for performing the steps of the method of monitoring operation of the packaging machine 1.

The method may comprise positioning the profile measurement sensor 12 facing the web 3 of packaging material advancing through the isolation chamber 8.

The method may comprise:
- receiving, from the profile measurement sensor 12, the sensor signal S; and
- detecting at least a portion of the first and/or second lateral edge 9, 10, in particular the border 14, of the web 3 of packaging material as a function of the sensor signal S.

The method may comprise, e.g. after installation of the profile measurement sensor 12 and/or in case of a movement of the profile measurement sensor 12:
- detecting (the position/profile) of the first marker 16 as a function of the sensor signal S, and
- checking whether the first marker 16 is at a predetermined position.

If the position of the first marker 16 is not at the predetermined position and/or varies in time away from the predetermined position, detecting a variation of position of the profile measurement sensor 12. In particular, if the position of the first marker 16 is not at the predetermined position, transmitting an alarm. Advantageously, this allows to monitor that the readings of the profile measurement sensor 12 are reliable in time, e.g. they are not hindered by human error such as an incorrect installation or the sensor being moved inadvertently.

The method may comprise:
- receiving a sensor signal S by means of the profile measurement sensor 12 facing the heating element 40; and
- detecting the heating element 40 as a function of the sensor signal S.

The method may comprise adjusting operation of the packaging machine 1 as a function of the sensor signal S, e.g. based on the detected elements.

### LIST OF REFERENCE NUMBERS

- 1: packaging machine
- 2: reel
- 3: web of packaging material
- 4: tube forming and sealing device
- 5: tube
- 6: guiding elements
- 7: filling device
- 8: isolation chamber
- 9: first lateral edge
- 10: second lateral edge
- 11: pillow packs
- 12: profile measurement sensor
- 13: control unit
- 14: border of the first lateral edge
- 16: first marker
- 18: second marker
- 40: heating element
- 40': first portion of the heating element
- 40": second portion of the heating element
- 42: first folding device
- 44: second folding device
- 46: pressure element
- 80: inner environment
- 82: outer environment
- LB: light beam
- P: advancement path
- RS: reference sensor signal
- S: sensor signal
- X: first axis
- Y: second axis
- Z: third axis

## Claims

1. A packaging machine (1) for producing sealed packages from a web (3) of packaging material, the packaging machine (1) comprising:
- a tube forming and sealing device (4) for folding said web (3) of packaging material from a planar shape into a tube (5) and for longitudinally sealing said tube (5), the forming and sealing device (4) comprising a heating element (40) configured for longitudinally sealing the tube (5);
- an isolation chamber (8) delimiting an inner environment (80) from an outer environment (82), wherein the heating element (40) is positioned within the isolation chamber (8);
- a profile measurement sensor (12) facing the heating element (40) and configured to generate a sensor signal (S); and
- a control unit (13) configured to detect at least a portion (40") of the heating element (40) as a function of the sensor signal (S).

2. The packaging machine (1) according to claim 1, comprising a first marker (16), wherein the control unit (13) is configured to detect the first marker (16) as a function of the sensor signal (S).

3. The packaging machine (1) according to claim 1 or claim 2, comprising a second marker (18) coupled to the heating element (40), wherein the control unit (13) is configured to detect the second marker (18).

4. The packaging machine (1) according to claim 2 or claim 3, wherein the control unit (13) is configured to calculate a distance between the first marker (16) and the second marker (18) and/or a relative physical orientation of the second marker (18) with respect to the first marker (16), and:
- check if the distance and/or physical orientation varies in time, and/or
- check if the distance and/or physical orientation varies from a predetermined distance and/or predetermined physical orientation.

5. The packaging machine (1) according to claim 3 or claim 4, wherein the second marker (18) protrudes from the heating element (40).

6. The packaging machine (1) according to any of the previous claims, wherein the control unit (13) is configured to detect at least a portion of a lateral edge (9, 14) of the web (3) of packaging material as a function of the sensor signal (S).

7. The packaging machine (1) according to the preceding claim, wherein the control unit (13) is configured to calculate a distance between the lateral edge (9, 14) of the web (3) and the second marker (18) and/or a distance between the lateral edge (9, 14) of the web (3) and the heating element (40).

8. The packaging machine (1) according to the preceding claim, wherein the control unit (13) is configured to check whether the distance between the portion of the lateral edge (9, 14) of the web (3) and the second marker (18) is non null.

9. The packaging machine (1) according to any of the previous claims, wherein:
- in use, the web (3) of packaging material is positioned between the profile measurement sensor (12) and a first portion (40') of the heating element (40),
- the control unit (13) is configured to detect a second portion (40'') of the heating element (40) as a function of the sensor signal (S), the second portion (40") being different from the first portion (40'),
- the control unit (13) is configured to calculate a position of the first portion (40') of the heating element (40) as a function of the second portion (40") of the heating element (40).

10. The packaging machine (1) according to any of the previous claims, wherein the profile measurement sensor (12) is a contactless sensor, preferably an optic sensor element, even more preferably a profilometer.

11. The packaging machine (1) according to any of the previous claims, wherein the profile measurement sensor (12) is arranged at the isolation chamber (8) in the outer environment (82).

12. The packaging machine (1) according to any of the previous claims, wherein the control unit (13) is configured to store data indicative of the detected heating element (40), a lateral edge (9, 14) of the web (4) of packaging material and/or a calculated first portion (40') of the heating element (40), wherein the web (3) of packaging material is positioned between the profile measurement sensor (12) and the first portion (40') of the heating element (40), preferably the data being associated with machine events and/or produced packages.

13. The packaging machine (1) according to any of the previous claims, wherein the control unit (13) is configured to adjust operation of the packaging machine (1) as a function of the sensor signal (S), preferably varying a speed of the web (3) of packaging material and/or adjusting operation of a tube forming and sealing device (4).

14. A method of monitoring operation of a packaging machine (1) comprising a tube forming and sealing device (4) for folding said web (3) of packaging material from a planar shape into a tube (5) and for longitudinally sealing said tube (5), the forming and sealing device (4) comprising a heating element (40) configured for longitudinally sealing the tube (5), the method comprising:
- receiving a sensor signal (S) from a profile measurement sensor (12) facing the heating element (40); and
- detecting at least a portion (40") of the heating element (40) as a function of the sensor signal (S).

15. A computer program product, loadable in the memory of at least one electronic control unit (13), and comprising software code portions suitable for performing the steps of the method according to claim 14.
